# DEMANDE DE BREVET EUROPEEN

(11) **EP 4 756 485 A1**
(43) Date de publication de la demande: **10.06.2026**
(21) Numéro de dépôt: 25217882.7
(22) Date de dépôt: 24.11.2025
(51) Int. Cl.: G01S 7/48, G01S 17/42, G01S 17/89, G01S 17/933, G06T 7/60

(54) **PROCEDE DE DETECTION D OBSTACLES AVEC UN SYSTEME A CAPTEUR D OBSTACLES LIDAR POUR UN AERONEF A VOILURE TOURNANTE**

(30) Priorité: 06.12.2024 FR 2413539
(71) Demandeur: Airbus Helicopters, 13725 Marignane Cedex (FR)
(72) Inventeur: BRAHMI, Amine, 13015 MARSEILLE (FR); GIRARD, Rémi, 13800 ISTRES (FR); MIRET, Romain, 13540 AIX EN PROVENCE (FR); MATEOS, Esteban, 13090 AIX EN PROVENCE (FR)
(74) Mandataire: GPI Brevets

(57) **Abrégé**

La présente invention concerne un procédé de détection d'obstacles avec un aéronef (1) ayant au moins une voilure tournante (5). Ce procédé comporte: i) acquisition (STP1) d'un nuage de points détectés avec au moins un capteur d'obstacles LIDAR (21, 22, 23, 24), ii) positionnement (STP2) de chaque point détecté dans un repère (100) orthonormé attaché à l'aéronef ayant un premier axe (Z) confondu avec un axe de rotation (AXROT) de la voilure tournante (5), iii) division (STP3) de l'espace environnant en unités volumétriques, le ou les points détectés présents dans une même unité volumétrique étant tous remplacés par un point représentatif, iv) segmentation du sol, v) détermination (STP5) de la présence ou de l'absence d'au moins un obstacle à partir des points représentatifs distincts du sol ; et affichage (STP6) sur un afficheur d'une symbologie illustrant ledit obstacle par rapport à l'aéronef.

## Description

La présente invention concerne un procédé de détection d'obstacles avec un système à capteur d'obstacles LIDAR pour un aéronef à voilure tournante.

Un aéronef peut comporter un ou des systèmes afin d'éviter une collision en vol avec un obstacle, tel que par exemple un immeuble, un pylône, un câble, une grue ou autres. Le terme « obstacle » utilisé par la suite fait référence à tout élément susceptible d'entrer en collision avec un aéronef.

Divers systèmes sont connus pour éviter une collision lors d'un vol effectué à proximité d'obstacles, par exemple lors de missions de secours en montagne ou dans un environnement encombré par des pylônes, des grues ou autres, ou encore lors de manœuvres proches du sol.

Un tel système peut comprendre un senseur d'obstacles actif configuré pour détecter, en vol, un ou des obstacles, et un afficheur mettant en évidence les obstacles détectés. Le senseur d'obstacles peut comprendre un ou des capteurs d'obstacles du type connu sous l'acronyme LIDAR et l'expression anglaise « Llght Detection And Ranging ». Un système LIDAR est muni d'un émetteur qui envoie des impulsions de lumière, généralement laser, dans une zone de détection à faible ouverture. Lorsqu'une impulsion rencontre un obstacle, elle est réfléchie et captée par un récepteur. En mesurant le temps de retour de l'impulsion, le système est capable de détecter et de calculer la distance à laquelle se trouve l'obstacle.

Si tous les obstacles présents dans le champ de détection sont détectés et signalés alors l'afficheur présentant ces points détectés peut alors être saturé.

Or, le système d'alerte d'évitement des obstacles pour hélicoptères ne doit pas alourdir davantage la charge de travail déjà importante des pilotes. En particulier, il est souhaitable qu'il ne déclenche pas d'alertes en continu lorsque l'aéronef survole le sol, mais qu'il se concentre uniquement sur les véritables obstacles. Dans la négative, le pilote, par frustration, risque de désactiver le système. Par ailleurs, le système de perception doit être capable d'analyser et de comprendre rapidement l'environnement en temps réel. Cela permet de garantir que chaque étape de la chaîne de traitement des capteurs soit exécutée dans un délai préétabli, permettant ainsi aux pilotes de prendre des décisions éclairées dans un cadre sécurisé.

Pour améliorer un système de détection d'obstacles, ce système peut implémenter un algorithme de segmentation du sol en temps réel. En effet, le pilote regardant le monde extérieur a de fait une représentation mentale du sol, et l'affichage de symboles illustrant les autres obstacles peut être suffisant pour l'assister. Cette technique présente l'inconvénient d'exiger des ressources en calcul élevées et donc des systèmes potentiellement lourds, onéreux et/ou encombrants.

Dans ce contexte, le document CN 116524219 A est éloigné du domaine de l'invention en ayant trait à un système automobile. Ce document décrit un procédé comportant un prétraitement du nuage de points obtenu avec un senseur, un filtrage du nuage de points par suppression des valeurs aberrantes, puis un sous-échantillonnage. Ce procédé comporte une séparation entre d'une part un nuage de points correspondant au sol et d'autre part un nuage de points correspondant à un ou des obstacles au moyen d'un algorithme d'ajustement linéaire prenant en considération la forme arrondie d'une chaussée.

Les documents EP 4 390 439 A1, Wang Xianzhe et al : « Research on detection method of airborne obstacle avoidance lidar", 20231218, vol. 12963, 18 décembre 2023 (2023-12-18), pages 1296318-1296318, XP060195426, CN 116 524 219 A, et CN 115 909 277 A sont aussi connus.

La présente invention a alors pour objet de proposer un procédé et un système innovants pour détecter des obstacles.

L'invention vise ainsi un procédé de détection d'obstacles mis en oeuvre par un aéronef ayant au moins une voilure tournante. Ce procédé de détection d'obstacles comporte :
- acquisition d'un nuage de points détectés avec au moins un capteur d'obstacles LIDAR embarqué dans l'aéronef,
- positionnement de chaque point détecté dans un repère orthonormé prédéterminé attaché à l'aéronef, ce repère ayant un premier axe confondu avec un axe de rotation de la voilure tournante,
- division de l'espace environnant en unités volumétriques ayant une géométrie prédéterminée, le ou les points détectés présents dans une même unité volumétrique étant tous remplacés par un point représentatif,
- segmentation du sol par un traitement pour détecter chaque point sol appartenant au sol parmi les points représentatifs ; ledit traitement comprenant, pour chaque point représentatif, une détection qu'une normale passant par ce point représentatif présente ou ne présente pas une angulation, avec un axe parallèle à l'axe de rotation, supérieure à un seuil angulaire prédéterminé, ladite normale étant une normale à une surface, cette surface comportant ce point représentatif et des points voisins,
- détermination de la présence ou de l'absence d'au moins un obstacle par regroupement des points représentatifs distincts des points sol ; et en présence d'au moins un obstacle, affichage sur un afficheur d'une symbologie illustrant ledit obstacle par rapport à l'aéronef.

Ainsi, un ou des capteurs d'obstacles LIDAR permettent d'acquérir un nuage de points dits « points détectés » par commodité.

Dès lors, ce nuage de points détectés est transformé en utilisant une approche dite de « voxelisation » par l'homme du métier. Chaque unité volumétrique est usuellement dénommée « voxel ». Tous les points détectés présents dans une unité volumétrique sont remplacés par un unique point dit « point représentatif » par commodité. La taille de chaque unité volumétrique influence le nombre de points à traiter, et par suite le temps et les ressources nécessaires pour détecter des obstacles. Des unités volumétriques de grandes dimensions produiront un nuage de points représentatifs plus petit, mais avec un risque de perte de détails fins, comme ceux des câbles électriques, et vice versa. Par exemple, chaque unité volumétrique a la forme d'un cube ayant des côtés compris entre 25 centimètres et un mètre, voire entre 50 centimètres et un mètre et par exemple de 55 centimètres de côté, pour avoir une bonne précision tout en limitant les ressources nécessaires pour mettre en œuvre le procédé.

Dès lors, le procédé comporte une étape de segmentation du sol pour faciliter les calculs. En raison de la spécificité d'un aéronef à voilure tournante et par exemple d'un hélicoptère qui présente de faibles angles de tangage et de roulis en vol, notamment lors de phases de vol durant lesquelles l'aéronef vole à proximité d'obstacles, tous les points représentatifs associés à une normale sensiblement parallèle à l'axe de rotation de la voilure tournante sont susceptibles d'appartenir au sol.

La détection d'un ou de plusieurs obstacles est alors réalisée de manière usuelle sur la base de tous les points représentatifs qui ne sont pas considérés comme appartenant au sol. Par exemple, pour détecter et identifier les obstacles, le procédé peut mettre en œuvre un algorithme de regroupement, tel que l'algorithme connu par l'acronyme « HDBSCAN » et l'expression anglaise « Hierarchical Density-Based Spatial Clustering of Applications with Noise » ou un algorithme de regroupement par distance euclidienne.

Le ou les obstacles détectés sont alors représentés dans une représentation en deux ou trois dimensions par exemple.

Ainsi, le procédé de l'invention permet de segmenter le sol rapidement et avec des moyens informatiques raisonnables, ce qui peut être réalisé avec un système potentiellement léger, peu couteux et/ou peu encombrant.

Le procédé de détection d'obstacles peut de plus comporter une ou plusieurs des caractéristiques qui suivent, prises seules ou en combinaison.

Selon une possibilité, le point représentatif d'une unité volumétrique peut être le barycentre équipondéré des points détectés de cette unité volumétrique ou le barycentre des points détectés de cette unité volumétrique pondérés par une intensité lumineuse de ces points détectés, ladite intensité lumineuse étant fournie par ledit capteur d'obstacles LIDAR.

Selon une possibilité compatible avec les précédentes, le seuil angulaire prédéterminé peut être égal à 20°.

Un tel seuil permet d'atteindre une précision acceptable.

Selon une possibilité compatible avec les précédentes, ladite symbologie peut comporter un symbole qui a une couleur qui varie en fonction d'un niveau de danger de l'obstacle déterminé en fonction d'une distance ou d'un temps d'impact estimé entre l'obstacle et l'aéronef.

Une codification par couleurs indiquant le niveau de danger, en fonction de la distance ou du temps avant impact évalué à l'aide du vecteur vitesse courant et de la distance, peut faciliter l'interprétation visuelle et la prise de décision du pilote.

Selon une possibilité compatible avec les précédentes si pour un point représentatif ladite angulation est inférieure ou égale au seuil angulaire prédéterminé alors ce point représentatif est un point d'intérêt susceptible d'appartenir au sol, ledit traitement comportant une détection de chaque point sol appartenant au sol parmi les points d'intérêts.

Un premier filtre consiste alors à déterminer le ou les points d'intérêt susceptibles d'appartenir au sol, en fonction de l'inclinaison de la normale associée.

La normale peut être déterminée par une méthode classique basée sur une décomposition en valeurs propres. Pour chaque point représentatif, on détermine les points voisins puis le centroïde du groupe de points comprenant ce point représentatif et les points voisins. Une matrice de covariance est déterminée à l'aide du centroïde et des points voisins. Cette matrice capture à la fois la variation et l'orientation de ces points voisins par rapport à leur centroïde, fournissant des informations sur la distribution spatiale locale. Les vecteurs propres de la matrice de covariance sont alors calculés et représentent les directions principales de la variation des points voisins. Le vecteur propre associé à la plus petite valeur propre est alors la normale recherchée.

Selon une possibilité compatible avec les précédentes, lesdits points voisins d'un point représentatif dont la normale est estimée peuvent comprendre tous les points représentatifs situés à une distance inférieure à une distance prédéterminée de ce point représentatif.

Selon une possibilité compatible avec les précédentes, ladite détection de chaque point sol appartenant au sol parmi les points d'intérêts peut comporter une comparaison entre une altitude de chaque point d'intérêt et une moyenne en altitude des points représentatifs du voisinage, un point d'intérêt étant un point sol quand l'altitude du point d'intérêt moins l'altitude de chaque point représentatif du voisinage est inférieure à une limite prédéterminée et que chaque point représentatif du voisinage du point d'intérêt est aussi un point d'intérêt, l'altitude d'un point d'intérêt étant égale à la coordonnée de ce point d'intérêt selon le premier axe.

Chaque point d'intérêt est définitivement considéré comme appartenant au sol si ce point d'intérêt respecte un critère de proximité en altitude atteint si ce point d'intérêt est sensiblement à la même altitude que ses voisins, à une tolérance près, et un critère de cohérence de voisinage atteint si les points du voisinage sont aussi des points d'intérêts. Cette méthode peut optimiser le temps de calcul. En outre, cette méthode permet d'obtenir une identification précise et robuste des points appartenant au sol dans un nuage de points.

Par exemple, ladite limite prédéterminée peut être égale à 1.5 mètre.

Par exemple, le voisinage d'un point d'intérêt peut comporter un nombre prédéterminé de points représentatifs les plus proches dans une sphère centrée sur ce point d'intérêt.

Par exemple, le nombre prédéterminé est égal à 15. Ainsi, à titre illustratif, le voisinage d'un point d'intérêt étudié comporte les 15 points représentatifs les plus proches de ce point d'intérêt étudié dans une sphère centrée sur ce point d'intérêt étudié.

Selon une autre méthode, ladite détection de chaque point sol peut comporter l'application d'un algorithme de consensus aléatoire par échantillonnage qui détermine au moins un paramètre d'un modèle plan et chaque point d'intérêt cohérent avec ce modèle plan, chaque point d'intérêt cohérent avec ce modèle plan étant un point sol.

L'algorithme de consensus aléatoire par échantillonnage est aussi connu sous l'expression anglaise « RANdom SAmple Consensus », et l'acronyme RANSAC. Cet algorithme est une méthode itérative utilisée pour estimer les paramètres d'un modèle prédéterminé qui représentent au mieux le nuage de point initial duquel un ensemble de points aberrants est soustrait. Le modèle est ici un plan affine et les paramètres caractérisent son orientation et un point qui lui appartient. De manière usuelle, l'algorithme sélectionne itérativement des sous-ensembles de points ayant une taille prédéterminée parmi les points d'intérêts déjà filtrés. Cette sélection est effectuée de façon aléatoire pour estimer des modèles plans et après avoir effectué un nombre limité d'itérations l'algorithme sélectionne le modèle plan dit optimal qui est le plus proche du sous-ensemble aléatoire dont il est issu. Ensuite les points qui sont à une distance de ce plan supérieure à un seuil optimal sont retenus comme étant des points d'intérêt n'appartenant pas au sol.

L'invention vise de plus un aéronef ayant au moins une voilure tournante, ledit aéronef ayant un système de détection d'obstacles comprenant au moins un capteur d'obstacles LIDAR ainsi qu'un contrôleur et un afficheur, le contrôleur communiquant avec ledit au moins un capteur d'obstacles LIDAR et ledit afficheur.

Le système de détection d'obstacles est configuré pour mettre en œuvre le procédé précité. Ainsi:
- ledit au moins un capteur d'obstacles LIDAR est configuré pour effectuer ladite acquisition d'un nuage de points détectés,
- ledit contrôleur est configuré pour effectuer ledit positionnement de chaque point détecté dans un repère orthonormé prédéterminé attaché à l'aéronef, ladite division de l'espace environnant en unités volumétriques, ladite segmentation du sol, et ladite détermination de la présence ou de l'absence d'au moins un obstacle, et
- ledit afficheur est configuré pour effectuer, en présence d'au moins un obstacle, ledit affichage d'une symbologie illustrant ledit obstacle par rapport à l'aéronef.

L'invention et ses avantages apparaîtront avec plus de détails dans le cadre de la description qui suit avec des exemples donnés à titre illustratif en référence aux figures annexées qui représentent :
la figure 1, une vue de dessus d'un aéronef selon l'invention,
la figure 2, un schéma illustrant un système de détection d'obstacles selon l'invention,
la figure 3, un logigramme illustrant le procédé mis en œuvre par un tel système de détection d'obstacles,
la figure 4, un schéma présentant un afficheur d'un tel système de détection d'obstacles représentant des obstacles en deux dimensions, et
la figure 5, un schéma présentant un afficheur d'un tel système de détection d'obstacles représentant des obstacles en trois dimensions.

Les éléments présents dans plusieurs figures distinctes sont affectés d'une seule et même référence.

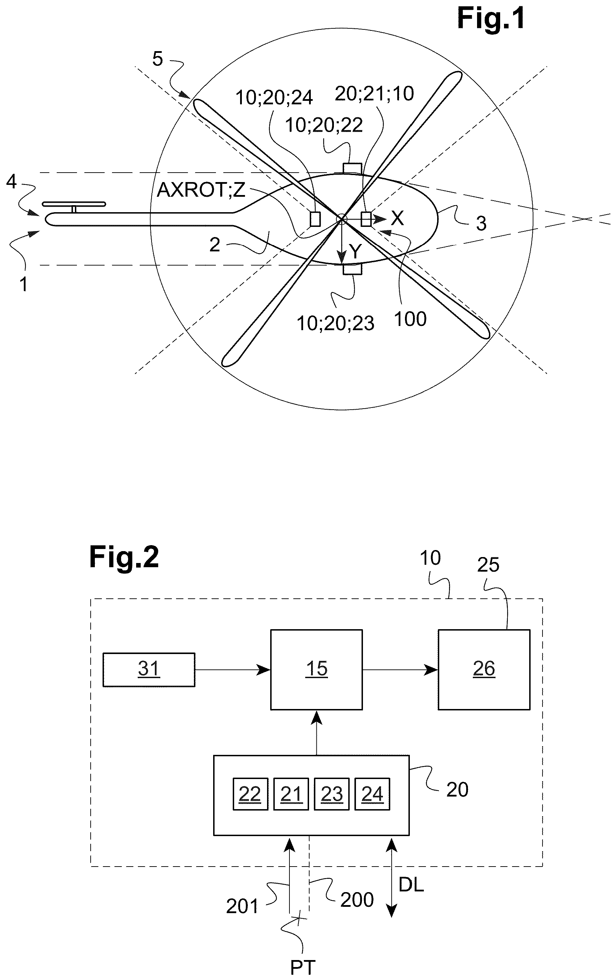

La figure 1 présente un aéronef 1 selon l'invention muni d'une voilure tournante 5 mobile en rotation autour d'un axe de rotation AXROT.

Par exemple, l'aéronef 1 comporte une cellule 2 qui s'étend longitudinalement selon son axe de roulis et de l'arrière vers l'avant, d'une queue 4 vers un nez 3, transversalement d'un premier flanc vers un second flanc et en élévation d'une barque vers un sommet. La voilure tournante 5 est alors mobile en rotation au-dessus de la cellule 2 selon la figure 1.

Par ailleurs, l'aéronef 1 comporte un système 10 de détection d'obstacles pour détecter d'éventuels obstacles présents dans un espace environnant, et le cas échéant pour les signaler à un pilote. Les ou les obstacles détectés sont positionnés dans un repère 100 orthonormé prédéterminé attaché à l'aéronef 1. Ce repère 100 a un premier axe Z confondu avec un axe de rotation AXROT de la voilure tournante 5, ainsi qu'un deuxième axe X et un troisième axe Y perpendiculaires au premier axe Z. Le deuxième axe X s'étend longitudinalement selon un sens allant de l'arrière vers l'avant, ou inversement, alors que le troisième axe Y s'étend transversalement selon un sens allant d'un flanc vers l'autre flanc.

Ce système 10 de détection d'obstacles comprend un senseur 20 d'obstacles pour détecter des obstacles, par exemple à 360 degrés autour de l'axe de rotation AXROT.

Le senseur 20 d'obstacles peut être configuré pour scanner des obstacles dans un premier volume couvrant 360 degrés en azimut autour de l'axe de rotation AXROT de la voilure tournante 5 et présentant une ouverture en élévation allant de +10° au-dessus de la voilure tournante 5 à -20° en dessous de la voilure tournante 5. De plus, le senseur 20 d'obstacles peut être configuré pouvoir couvrir vers l'avant de l'aéronef 1 un second volume englobant une partie du premier volume, en s'étendant en azimut par rapport au dit référentiel sur 120 degrés par exemple, et présentant une ouverture en élévation allant de +10° au-dessus de la voilure tournante 5 à - 50° en dessous de la voilure tournante 5.

Le senseur 20 d'obstacles peut être configuré pour détecter des obstacles à une vitesse allant jusqu'à 30 nœuds (soit environ 55.56 Kilomètres par heure), et avec une portée maximale de l'ordre de 200 mètres. Ainsi, un tel senseur 20 d'obstacles offre alors à un pilote un temps de réaction acceptable.

A cet effet, le senseur 20 d'obstacles comporte au moins un capteur d'obstacles LIDAR 21, 22, 23, 24. Selon l'exemple de la figure 1, le senseur 20 d'obstacles comporte au moins quatre capteurs d'obstacles LIDAR 21, 22, 23, 24 par exemple localisés à proximité de la voilure tournante 5. Par exemple, un premier capteur d'obstacles LIDAR 21 est porté par la cellule sous la voilure tournante et dirigé vers l'avant de l'aéronef 1, par exemple pour couvrir le second volume précité, et peut être incliné vers le bas et l'avant au regard de l'aéronef 1, et deux capteurs d'obstacles LIDAR 22, 23 sont portés par la cellule sous la voilure tournante et dirigés pour couvrir des volumes du côté respectivement des deux flancs, et un quatrième capteur d'obstacles LIDAR 24 est porté par la cellule sous la voilure tournante et dirigé vers l'arrière de l'aéronef 1. Eventuellement, les capteurs d'obstacles LIDAR 21, 22, 23, 24 peuvent couvrir des volumes qui se recoupent. On se référera à la littérature pour avoir des exemples d'un senseur muni d'au moins un capteur LIDAR.

Chaque capteur d'obstacle 21 LIDAR peut émettre des impulsions de lumière, et à cet effet comprendre à titre d'exemple une pluralité de diodes LASER.

En référence à la figure 2, le système 10 de détection d'obstacles comprend en outre un contrôleur 15 comprenant au moins une unité de traitement. Une telle unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 15 est en communication avec le senseur d'obstacles 20, à savoir avec le ou les capteurs d'obstacles 21, 22, 23, 24.

Par ailleurs, le contrôleur 15 peut être en liaison filaire ou non filaire avec un senseur de vitesse 31. Le senseur de vitesse 31 peut comprendre au moins un capteur pour déterminer un vecteur vitesse de l'aéronef 1. Par exemple, le senseur de vitesse 31 peut comporter un récepteur d'un dispositif de positionnement par satellites, un système navigation utilisant l'effet Doppler-Fizeau, une centrale inertielle...

Par ailleurs, le contrôleur 15 est en liaison filaire ou non filaire avec un afficheur 25. Cet afficheur 25 peut comprendre un moyen d'affichage 26, tel qu'un écran, une visière de casque, un verre de lunette, un collimateur tête haute ou autres.

Le contrôleur 15 peut comprendre par exemple un calculateur de traitement pour mettre en œuvre l'invention et un calculateur générateur de symboles pour afficher des symboles sur l'afficheur au sein d'une ou de plusieurs unités de traitement. Le calculateur générateur de symboles peut être intégré à l'afficheur 25 ou déporté. Selon un exemple, l'afficheur 25 et le calculateur générateur de symboles peuvent former un même équipement, le calculateur de traitement étant un calculateur dédié ou non au procédé de l'invention.

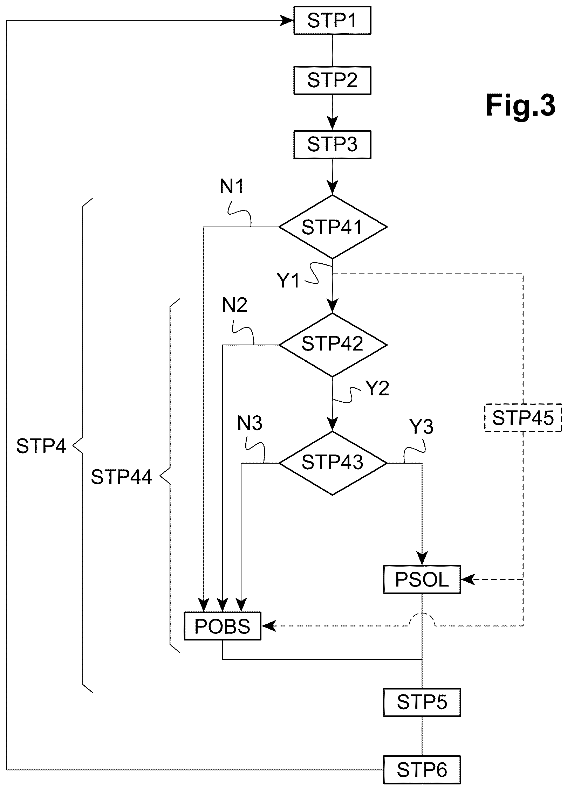

Indépendamment de la manière de réaliser le système 10 de détection d'obstacles, la figure 3 illustre le procédé de détection d'obstacles selon l'invention mis en œuvre par un tel aéronef 1 de manière itérative.

Ce procédé comporte une acquisition, lors d'une étape STP1 et avec le senseur d'obstacles 20 d'un nuage de points détectés. Chaque capteur d'obstacles LIDAR 21, 22, 23, 24 émet un faisceau lumineux 200. Lorsqu'un faisceau lumineux 200 impacte un point d'un obstacle dénommé « point détecté PT » par commodité, un écho 201 est réfléchi vers le capteur d'obstacles 21, 22, 23, 24. Le capteur d'obstacle 21, 22, 23, 24 en déduit des données de positionnement permettant de localiser l'obstacle dans le repère 100, voire l'intensité lumineuse de l'écho 201. Ces données de positionnement peuvent comprendre la distance DL séparant le point détecté PT du capteur d'obstacles 21 ainsi qu'un angle de gisement et un angle de site dans le référentiel du capteur d'obstacles.

Dès lors, le procédé comporte un positionnement, durant une étape STP2 et avec le contrôleur 15, de chaque point détecté PT dans le repère 100. Le contrôleur 15 est alors configuré, par exemple en exécutant des instructions mémorisées dans une mémoire, pour mettre en œuvre cette étape.

Ces deux étapes initiales STP1, STP2 permettent de structurer de manière cohérente les points détectés PT détectés dans l'espace environnant.

Le procédé comporte ensuite une division, durant une étape STP3 et avec le contrôleur 15, de l'espace environnant en unités volumétriques ayant une géométrie prédéterminée. Tous les points détectés PT présents dans une même unité volumétrique sont en outre remplacés par un point représentatif.

Le contrôleur 15 applique alors un algorithme dit de « voxelisation » usuel à cet effet. Le contrôleur 15 est alors configuré, par exemple en exécutant des instructions mémorisées dans une mémoire, pour mettre en œuvre cette étape.

Selon une possibilité, le contrôleur 15 calcule les coordonnées du point représentatif de chaque unité volumétrique, en considérant que ce point représentatif est le barycentre équipondéré des points détectés de cette unité volumétrique. Les coordonnées du point représentatif sont calculées en fonction des coordonnées des points détectés de l'unité volumétrique.

Alternativement, le contrôleur 15 calcule les coordonnées du point représentatif de chaque unité volumétrique, dans le repère 100 en considérant que ce point représentatif est le barycentre des points détectés de cette unité volumétrique pondérés par une intensité lumineuse de ces points détectés. Les coordonnées du point représentatif sont donc calculées en fonction des coordonnées des points détectés de l'unité volumétrique pondérées par l'intensité lumineuse des points détectés.

Cette méthode, utilisant des formes géométriques variées comme des cubes ou des parallélépipèdes par exemple, simplifie la gestion d'un très grand nombre de points détectés, en équilibrant complexité computationnelle et précision.

Le procédé comporte alors une segmentation du sol mise en œuvre avec le contrôleur 15. Le contrôleur 15 est alors configuré, par exemple en exécutant des instructions mémorisées, pour mettre en œuvre cette étape. Le contrôleur 15 identifie, parmi les points représentatifs, les points sol appartenant au sol survolé pour réduire le temps de calcul.

Cette segmentation du sol comporte un traitement, durant une étape STP4 mise en œuvre avec le contrôleur 15, permettant d'identifier les points représentatifs POBS n'appartenant pas au sol et les points représentatifs dit « points sol » appartenant au sol.

Durant ce traitement, le contrôleur 15 est configuré pour déterminer des points d'intérêt parmi les points représentatifs durant une étape STP41. Ce traitement comporte de plus une détection lors d'une étape STP44 de chaque point sol appartenant au sol parmi les points d'intérêts.

A cet effet, le traitement comporte, pour chaque point représentatif, une détection, durant une étape STP41 mise en œuvre avec le contrôleur, qu'une normale passant par ce point représentatif présente ou ne présente pas une angulation avec un axe parallèle à l'axe de rotation supérieure à un seuil angulaire prédéterminé. Cette normale est une normale à une surface, cette surface passant par ce point représentatif et des points voisins. Par exemple, ledit seuil angulaire prédéterminé est égal à 20°. Si la normale présente une angulation avec un axe parallèle à l'axe de rotation supérieure au seuil angulaire prédéterminé, alors le point représentatif n'appartient pas au sol.

Un tel filtrage par des calculs de normales réduit la complexité du traitement et exclut rapidement les points ne répondant pas aux critères de planéité associés au sol.

A cet effet, pour chaque unité volumétrique, le contrôleur 15 est configuré pour déterminer la normale, au niveau d'un point représentatif, à une surface passant par ce point représentatif et les points voisins. Pour chaque point représentatif; les points voisins comprennent tous les points représentatifs situés à une distance inférieure à une distance prédéterminée, par exemple de l'ordre de 2 à 4 fois la longueur d'un côté d'une unité volumétrique, de ce point représentatif. Le contrôleur 15 détermine ensuite une angulation séparant cette normale d'un axe parallèle à l'axe de rotation et la compare au seuil angulaire prédéterminé. Si cette angulation n'est pas inférieure ou égale au seuil angulaire prédéterminé, conformément à la flèche N1, le point représentatif n'est pas un point appartenant au sol mais un point dit « point d'obstacle POBS » pouvant appartenir à un obstacle. A l'inverse et selon la flèche Y1, le point représentatif est un point d'intérêt pouvant être un point sol PSOL.

Dès lors, la figure 3 décrit deux variantes pour réaliser l'étape STP44 visant à évaluer si un point d'intérêt est un point d'obstacle POBS ou un point sol PSOL.

Selon la première variante illustrée en traits continus, la détection STP44 de chaque point sol PSOL appartenant au sol parmi les points d'intérêts comporte une comparaison lors d'une étape STP42 entre une altitude de chaque point d'intérêt et une moyenne des altitudes des points représentatifs du voisinage. Le contrôleur 15 détermine ainsi une différence entre l'altitude de chaque point d'intérêt et la moyenne des altitudes des points du voisinage. Si cette différence est inférieure à une limite prédéterminée, par exemple égale à 1.5 mètre, alors conformément à la flèche N2, le point d'intérêt n'est pas un point sol PSOL mais un point d'obstacle POBS. A l'inverse et selon la flèche Y2, le point d'intérêt peut être un point sol PSOL.

Il est à noter que le voisinage d'un point d'intérêt comporte un nombre prédéterminé, par exemple égal à 15, de points représentatifs les plus proches dans une sphère centrée sur ce point d'intérêt.

Après, en même temps ou avant l'étape STP42, le contrôleur 15 détermine lors d'une étape STP43 si chaque point représentatif du voisinage du point d'intérêt est aussi un point d'intérêt répondant au critère de la normale précité. Dans la négative et conformément à la flèche N3, le point d'intérêt n'est pas un point sol PSOL mais un point d'obstacle POBS. A l'inverse et selon la flèche Y3, le point d'intérêt peut être un point sol PSOL.

Dès lors, le contrôleur 15 estime qu'un point représentatif est un point sol si trois conditions sont remplies en même temps à savoir : i) si le point représentatif est un point d'intérêt, ii) l'altitude d'un point représentatif est sensiblement égale à la moyenne des altitudes des points représentatifs du voisinage, iii) les points représentatifs du voisinage sont des points d'intérêt.

Selon la deuxième variante illustrée en pointillés, la détection STP44 de chaque point sol PSOL comporte l'application, durant une étape STP45, d'un algorithme de consensus aléatoire par échantillonnage qui détermine au moins un paramètre d'un modèle plan et chaque point d'intérêt cohérent avec ce modèle plan, chaque point d'intérêt cohérent avec ce modèle plan étant un point sol PSOL.

Quelle que soit la variante, le procédé comporte une détermination, durant une étape STP5 mise en œuvre avec le contrôleur 15, de la présence ou de l'absence d'au moins un obstacle à partir des points représentatifs distincts du sol, à savoir les points d'obstacles POBS. Le contrôleur 15 est alors configuré, par exemple en exécutant des instructions mémorisées, pour mettre en œuvre cette étape.

Ainsi, après la segmentation du sol, les points détectés PT qui ne répondent pas aux critères de sol, sont regroupés par le contrôleur 15. Cette étape permet d'identifier et de distinguer clairement les obstacles potentiels dans l'environnement en appliquant une méthode connue de l'homme du métier.

Dès lors, en présence d'au moins un obstacle, le procédé comporte un affichage STP6 sur un afficheur 25 d'une symbologie illustrant ledit obstacle par rapport à l'aéronef 1.

Par exemple, le contrôleur 15 transmet un signal numérique à l'afficheur 25 porteur des informations à afficher. Les résultats peuvent être affichés en deux dimensions ou en trois dimensions. En outre, un symbole représentant un obstacle peut avoir une couleur qui varie en fonction d'un niveau de danger de l'obstacle déterminé en fonction d'une distance ou d'un temps d'impact entre l'obstacle et l'aéronef 1.

Par exemple, un obstacle n'est pas jugé dangereux s'il est situé à une distance ou à un temps d'impact estimé supérieur à une première valeur respective prédéterminée, moyennement dangereux s'il est situé à une distance ou à un temps d'impact inférieur ou égal à la première valeur respective prédéterminée et supérieur à une deuxième valeur respective prédéterminée, et dangereux s'il est situé à une distance ou à un temps d'impact inférieur ou égal à la deuxième valeur respective prédéterminée.

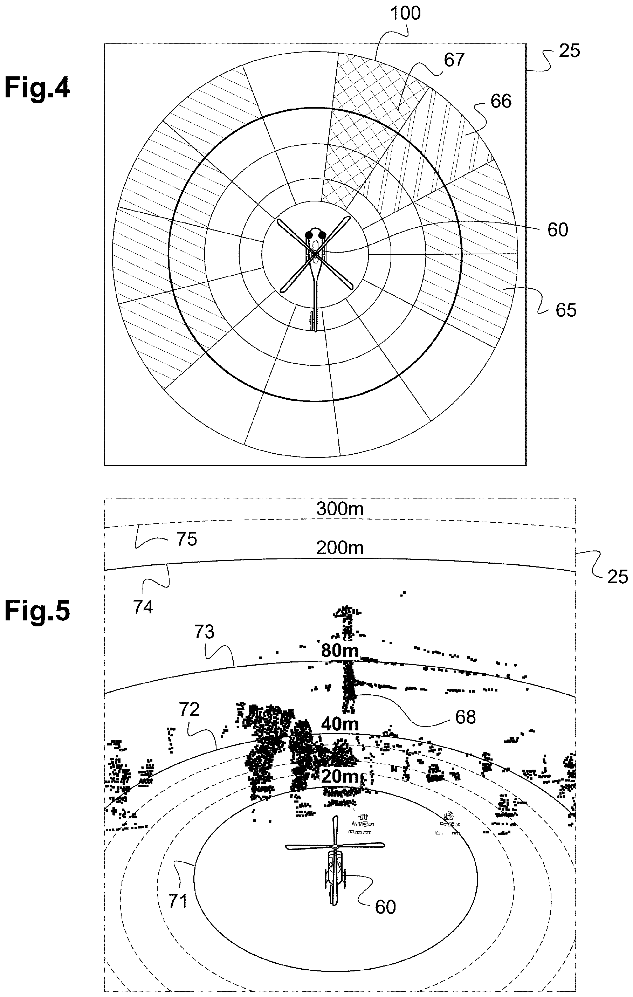

La figure 4 illustre une réalisation affichant les résultats en deux dimensions au travers d'un graphique polaire.

L'écran présente un symbole d'aéronef 60 représentant l'aéronef 1. Ce symbole d'aéronef 60 est au centre de cercles concentriques découpés en secteurs angulaires 65-67. Chaque secteur angulaire représente un symbole susceptible d'illustrer la présence d'un obstacle. Si un obstacle est détecté dans un secteur angulaire, ce secteur angulaire 65-67 est mis en évidence, éventuellement en fonction de la dangerosité estimée de l'obstacle. Par exemple, un secteur angulaire 65 est colorié en vert si l'obstacle n'est pas jugé dangereux, un secteur angulaire 66 est colorié en orange si l'obstacle est moyennement dangereux et un secteur angulaire 67 est colorié en rouge si l'obstacle est jugé dangereux.

La figure 5 illustre une réalisation affichant les résultats en trois dimensions. Seuls les obstacles sont affichés par le biais de symboles 68, tandis que le sol est soit supprimé, soit colorié différemment pour offrir une meilleure distinction. Les symboles peuvent prendre la forme de points, chaque symbole représentant un point d'obstacle. Des arcs de cercle 71-75 peuvent être disposés au niveau d'un sol pour illustrer des distances par rapport à l'aéronef.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. **Il** est bien sûr envisageable de remplacer un moyen décrit par un moyen équivalent sans sortir du cadre de la présente invention défini par les revendications.

## Revendications

1. Procédé de détection d'obstacles mis en œuvre par un aéronef (1) ayant au moins une voilure tournante (5),
**caractérisé en ce que** le procédé de détection d'obstacles comporte:
- acquisition (STP1) d'un nuage de points détectés avec au moins un capteur d'obstacles LIDAR (21, 22, 23, 24) embarqué dans l'aéronef (1),
- positionnement (STP2) de chaque point détecté dans un repère (100) orthonormé prédéterminé attaché à l'aéronef (1), ce repère (100) ayant un premier axe (Z) confondu avec un axe de rotation (AXROT) de la voilure tournante (5),
- division (STP3) de l'espace environnant en unités volumétriques ayant une géométrie prédéterminée, le ou les points détectés présents dans une même unité volumétrique étant tous remplacés par un point représentatif,
- segmentation du sol par un traitement (STP4) pour détecter chaque point sol (PSOL) appartenant au sol parmi les points représentatifs ; ledit traitement (STP4) comprenant, pour chaque point représentatif, une détection (STP41) qu'une normale passant par ce point représentatif présente ou ne présente pas une angulation, avec un axe parallèle à l'axe de rotation, supérieure à un seuil angulaire prédéterminé, ladite normale étant une normale à une surface comportant ce point représentatif et des points voisins,
- détermination (STP5) de la présence ou de l'absence d'au moins un obstacle par regroupement des points représentatifs distincts des points sol ; et en présence d'au moins un obstacle, affichage (STP6) sur un afficheur (25) d'une symbologie(65-68) illustrant ledit obstacle par rapport à l'aéronef (1).

2. Procédé de détection d'obstacles selon la revendication 1, **caractérisé en ce que** le point représentatif d'une unité volumétrique est le barycentre équipondéré des points détectés de cette unité volumétrique ou le barycentre des points détectés de cette unité volumétrique pondérés par une intensité lumineuse de ces points détectés, ladite intensité lumineuse étant fournie par ledit capteur d'obstacles LIDAR.

3. Procédé de détection d'obstacles selon l'une quelconque des revendications 1 à 2,
**caractérisé en ce que** ledit seuil angulaire prédéterminé est égal à 20°.

4. Procédé de détection d'obstacles selon l'une quelconque des revendications 1 à 3,
**caractérisé en ce que** ladite symbologie a un symbole (65, 67) qui a une couleur qui varie en fonction d'un niveau de danger de l'obstacle déterminé en fonction d'une distance ou d'un temps d'impact estimé entre l'obstacle et l'aéronef (1).

5. Procédé de détection d'obstacles selon l'une quelconque des revendications 1 à 4,
**caractérisé en ce que** lesdits points voisins d'un point représentatif dont la normale est estimée comprennent tous les points représentatifs situés à une distance inférieure à une distance prédéterminée de ce point représentatif.

6. Procédé de détection d'obstacles selon l'une quelconque des revendications 1 à 5,
**caractérisé en ce que** si pour un point représentatif ladite angulation est inférieure ou égale au seuil angulaire prédéterminé alors ce point représentatif est un point d'intérêt susceptible d'appartenir au sol, ledit traitement (STP4) comportant une détection (STP44) de chaque point sol appartenant au sol parmi les points d'intérêts.

7. Procédé de détection d'obstacles selon la revendication 6,
**caractérisé en ce que** ladite détection (STP44) de chaque point sol appartenant au sol parmi les points d'intérêts comporte une comparaison (STP42) entre une altitude de chaque point d'intérêt et une moyenne en altitude des points représentatifs d'un voisinage, un point d'intérêt étant un point sol quand l'altitude du point d'intérêt moins l'altitude de chaque point représentatif du voisinage est inférieure à une limite prédéterminée et que chaque point représentatif du voisinage du point d'intérêt est aussi un point d'intérêt, l'altitude d'un point d'intérêt étant égale à la coordonnée de ce point d'intérêt selon le premier axe.

8. Procédé de détection d'obstacles selon la revendication 7,
**caractérisé en ce que** ladite limite prédéterminée est égale à 1.5 mètre.

9. Procédé de détection d'obstacles selon l'une quelconque des revendications 7 à 8,
**caractérisé en ce que** le voisinage d'un point d'intérêt comporte un nombre prédéterminé de points représentatifs les plus proches dans une sphère centrée sur ce point d'intérêt.

10. Procédé de détection d'obstacles selon la revendication 6,
**caractérisé en ce que** ladite détection (STP44) de chaque point sol comporte l'application (STP45) d'un algorithme de consensus aléatoire par échantillonnage qui détermine au moins un paramètre d'un modèle plan et chaque point d'intérêt cohérent avec ce modèle plan, chaque point d'intérêt cohérent avec ce modèle plan étant un point sol.

11. Aéronef (1) ayant au moins une voilure tournante (5), ledit aéronef (1) ayant un système (10) de détection d'obstacles comprenant au moins un capteur d'obstacles LIDAR (21, 22, 23, 24) ainsi qu'un contrôleur (15) et un afficheur (25), le contrôleur (15) communiquant avec ledit au moins un capteur d'obstacles LIDAR (21, 22, 23, 24) et ledit afficheur,
**caractérisé en ce que** le système (10) de détection d'obstacles est configuré pour mettre en œuvre le procédé selon l'une quelconque des revendications 1 à 10:
- ledit au moins un capteur d'obstacles LIDAR (21, 22, 23, 24) étant configuré pour effectuer ladite acquisition d'un nuage de points détectés,
- ledit contrôleur (15) étant configuré pour effectuer ledit positionnement de chaque point détecté dans un repère orthonormé prédéterminé attaché à l'aéronef, ladite division de l'espace environnant en unités volumétriques, ladite segmentation du sol, et ladite détermination de la présence ou de l'absence d'au moins un obstacle, et
- ledit afficheur (25) étant configuré pour effectuer, en présence d'au moins un obstacle, ledit affichage d'une symbologie illustrant ledit obstacle par rapport à l'aéronef.
